(19) Europäisches Patentamt / European Patent Office / Office européen des brevets

(11) **EP 4 098 982 B1**

(12) **EUROPÄISCHE PATENTSCHRIFT**

(45) Veröffentlichungstag und Bekanntmachung des Hinweises auf die Patenterteilung:
**14.08.2024  Patentblatt 2024/33**

(21) Anmeldenummer: **22166543.3**

(22) Anmeldetag: **04.04.2022**

(51) Internationale Patentklassifikation (IPC):
**G01G 19/08** (2006.01)    **G01G 23/01** (2006.01)
**F16F 9/04** (2006.01)

(52) Gemeinsame Patentklassifikation (CPC):
**F16F 9/0418; G01G 19/08; G01G 23/01;**
B60G 2800/7022; F16F 2230/0017; F16F 2230/08

(54) **VERFAHREN ZUM KALIBRIEREN EINER LUFTGEFEDERTEN VORRICHTUNG IN EINEM KARTESISCHEN VORRICHTUNGSKOORDINATENSYSTEM**

METHOD FOR CALIBRATING A PNEUMATIC SUSPENSION DEVICE IN A CARTESIAN DEVICE COORDINATE SYSTEM

PROCÉDÉ D'ÉTALONNAGE D'UN DISPOSITIF DE SUSPENSION PNEUMATIQUE DANS UN SYSTÈME CARTÉSIEN DE COORDONNÉES DE DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2021   DE 102021205565**

(43) Veröffentlichungstag der Anmeldung:
**07.12.2022   Patentblatt 2022/49**

(73) Patentinhaber: **ContiTech Deutschland GmbH**
**30175 Hannover (DE)**

(72) Erfinder:
• **Stöter, Bernd**
**30165 Hannover (DE)**
• **Mosich, Manuel**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**US-A1- 2011 197 414**

**Beschreibung**

Die vorliegende Erfindung betrifft ein Verfahren zum Kalibrieren einer luftgefederten Vorrichtung in einem kartesischen Vorrichtungskoordinatensystem gemäß des Patentanspruchs 1, eine luftgefederte Vorrichtung zur Durchführung eines derartigen Verfahrens gemäß dem Patentanspruch 5, ein Computerprogramm zur Durchführung eines derartigen Verfahrens auf einer derartigen luftgefederten Vorrichtung gemäß des Patentanspruchs 6 sowie ein computerlesbares Medium mit einem derartigen Computerprogramm gemäß des Patentanspruchs 7.

Es ist bekannt, dass Luftfedern im Allgemeinen beispielsweise zur Schwingungsisolierung von Anlagen und Maschinen eingesetzt werden. Luftfedern besitzen die Eigenschaft, dass deren Betriebshöhe mittels Druckluft variiert und justiert werden kann. Für derartige Luftfeder-Anwendungsfälle kommen daher zusätzlich noch Einrichtungen zum Einsatz, welche die Höhe der Luftfeder auf ein vorgegebenes Maß regeln, um das Niveau zu justieren. Dies können beispielsweise drei Höhenregelventile sein, welche zueinander beabstandet an der luftgefederten Anlage bzw. Maschine montiert sind und das Niveau gegenüber der Aufstandsfläche erfassen und regeln können.

Inertiale Messeinheiten kommen zum Einsatz, um dynamische Zustandsänderungen der Lage von Anlagen und Maschinen zu erfassen, um den Betrieb zu überwachen oder um Bewegungen und Betriebsabläufe zu steuern. Derartige Messeinheiten, welche eine räumliche Kombination mehrerer einzelner Inertialsensoren, wie zum Beispiel mehrerer Beschleunigungssensoren oder mehrerer Drehratensensoren, darstellen, erfassen physikalische Größen in Bezug zu drei orthogonal zueinanderstehenden Achsen, welche üblicherweise in kartesischen Koordinaten als X-, Y- und Z-Achse benannt werden. Handelt es sich bei der Maschine oder Anlage um eine mechanisch starre Einheit, so genügt bereits eine einzige damit fest verbundene inertiale Messeinheit, um alle Messgrößen in den sechs Freiheitsgraden, d.h. jeweils eine Translation entlang der drei Achsen und jeweils eine Rotation um diese drei Achsen, zu bestimmen.

Nachteilig ist bei der Verwendung einer separaten inertialen Messeinheit, dass dies zu einem erhöhten Aufwand hinsichtlich Investitionskosten, Montage, Steuerung und bzw. oder Inbetriebnahme führen kann. Zudem sind inertiale Messeinheiten in der Regel nicht als universal verwendbare separate Bauteile verbreitet, sondern werden direkt für spezifische Anwendungen konfiguriert und mit weiteren Komponenten als entsprechendes Komplettpaket angeboten, zum Beispiel zur Unwuchterkennung. Dieser Umstand kann dem Anwender den Einsatz für eigene Anwendungen erschweren bzw. die hierfür erforderlichen Kosten erheblich erhöhen, da nicht auf kostengünstige Standardlösungen, d.h. auf allgemein verwendbare inertiale Messeinheiten, zurückgegriffen werden kann.

Die DE 10 2015 202 624 A1 beschreibt eine fluidisch betriebene Stelleinrichtung - wie beispielsweise eine Luftfeder - mit integrierten Sensoren zur Erfassung von Betriebszuständen. Diese Sensoren können beispielsweise Neigungssensoren, Drucksensoren, Temperatursensoren oder Höhensensoren sein.

Nachteilig bei derartigen fluidisch betriebenen Stelleinrichtungen ist, dass die Sensoreinheit von innen mittels Luftanschlussgewinde in der Luftfeder verschraubt werden muss. So sind zwar vorteilhafterweise Luftfedern in mindestens einem ihrer Anschlussteile mit mindestens einem Luftanschlussgewinde ausgestattet, dessen Gewinde für die Befestigung eines Sensors an dem Anschlussteil verwendet werden kann. Hieraus resultiert jedoch für den Anwender das Problem der Ausrichtung der Achsen, welche die Bezugsgrößen für die Beschleunigungen sind. Während nämlich bei entsprechendem Aufbau der Sensoreinheit eine Achse koaxial zum Luftanschlussgewinde ist, kann das Koordinatensystem der beiden anderen Achsen beim Verschrauben beliebig auf einer Ebene orthogonal zur ersten Achse angeordnet sein. Somit ist kein eindeutiger Bezug dieses Koordinatensystems in Bezug auf die Montageposition der mit dieser Sensoreinheit ausgerüsteten Luftfeder gewährleistet.

Zur Überwindung dieses Nachteils eine Einrichtung zur exakten Positionierung, wie zum Beispiel eine Markierung, zu verwenden, ist jedoch nicht zielführend, da das Verschrauben zwecks Dichtigkeit auf flächenbündige Positionierung angewiesen ist. Zudem kann in Folge der Addition von Toleranzen entlang der gesamten Montagekette von Sensoreinheit über den Luftanschluss der Luftfeder und über die Befestigungspunkte der Luftfeder bis hin zur Anlage bzw. zur Maschine eine exakte Ausrichtung der Achsen der Sensoreinheit zum Koordinatensystem der Maschine nicht gewährleistet werden.

Die DE 10 2015 202 622 A1 beschreibt ein Verfahren zur Niveauregulierung durch eine Mehrzahl fluidisch betriebener Stelleinrichtungen, beispielsweise zur Anwendung als Maschinenlagerung. Die Stelleinrichtungen sind signaltechnisch miteinander gekoppelt und können hierdurch in Wechselwirkung zueinander treten sowie koordiniert untereinander betrieben werden.

Nachteilig ist in diesem Fall, dass sich das zuvor erläuterte Problem der eindeutigen Positionierung der Achsen eines Sensors zur Maschine vergrößern kann, wenn eine Mehrzahl von Sensoren bei einer Anlage bzw. bei einer Maschine zum Einsatz kommen. In diesem Fall können bereits die Koordinaten der Sensoren untereinander nicht parallel oder orthogonal zueinander sein.

Die US 10 300 602 B2 offenbart die Vorgehenseise und erforderlichen Einrichtungen zur Koordinatentransformation von einem beliebig angeordneten Werkstück oder Werkzeug in Bezug auf die Referenz-Koordinaten eines Roboters. Hierbei wird ein Inertialsensor in definierter Achsenausrichtung am Werkstück oder am Werkzeug befestigt. Ein Vergleich der Signale des Inertialsensors mit denen des Roboters bei definierten

3    EP 4 098 982 B1    4

Roboterbewegungen liefert die Kalibrier-Faktoren für die Koordinatentransformation vom Werkstück auf das Roboter-Referenz-Koordinatensystem.

Nachteilig hieran ist, dass dieses Verfahren nur zur Anwendung kommen kann, falls die drei Raumrichtungen des Roboter-Referenz-Koordinatensystems bekannt sind und die Bewegungen des Roboters in Bezug auf diese drei Raumrichtungen für die Kalibrierung herangezogen werden können.

Die DE 10 2015 015 094 A1 beschreibt die Verwendung von optischen Referenzpunkten an einer Werkzeugmaschine, die vom Kamerasystem eines Roboters erfasst werden, zur Berechnung der Faktoren der Koordinatentransformation.

Die DE 10 2016 222 082 A1 beschreibt ein Verfahren zur Ermittlung eines einen Zustand einer von einem Fahrzeug befahrenen Fläche, insbesondere einer Straße, repräsentierenden Zustandswerts. Das Fahrzeug weist wenigstens einen Inertialsensor auf. Der Zustandswert wird in Abhängigkeit wenigstens eines von dem Inertialsensor erfassten ersten Signals erhöht oder verringert.

Die WO 2017 129 199 A1 beschreibt ein Verfahren zum Bestimmen eines Kippzustandes eines Fahrzeugs bezogen auf eine Fahrbahnoberfläche basierend auf einem mindestens einen Modellparameter umfassenden Kippmodell. Das Verfahren umfasst das Messen eines ersten Wertes einer Fahrzustandsgröße anhand einer Inertialsensorik, die an dem Fahrzeug angebracht ist. Ferner umfasst es das Ermitteln eines relativ zur Fahrbahnoberfläche definierten Kippwinkels des Fahrzeugs basierend auf dem ersten Messwert und das Abgleichen des mindestens einen Modellparameters des Kippmodells basierend auf dem ermittelten Kippwinkel und dem ersten Messwert. Das Kippmodell stellt eine auf dem mindestens einen Modellparameter basierende Funktion des Kippwinkels in Abhängigkeit des ersten Wertes der gemessenen Fahrzustandsgröße dar. Schließlich umfasst das Verfahren das Bestimmen des Kippzustandes des Fahrzeugs mittels des Kippmodells basierend auf dem ersten Messwert der Fahrzustandsgröße und/oder einem zweiten anhand der Inertialsensorik gemessenen Messwert der Fahrzustandsgröße.

Die US 2011/197414 A1 beschreibt ein Verfahren zum Einbau einer Sensoranordnung in ein Fahrzeug mit einem Fahrzeugchassis, wobei sich das Fahrzeugchassis beim Einbau in einer definierten Position befindet und die Sensoranordnung direkt oder indirekt am Fahrzeugchassis befestigt wird, wobei die Sensoranordnung einen oder mehrere Beschleunigungssensoren mit drei linear unabhängigen Messrichtungen umfasst und die Sensoranordnung eine elektronische Steuereinheit aufweist, die so konfiguriert ist, dass sie einen Sensorkalibriermodus umfasst, wobei nach der Anbringung der Sensoranordnung der mindestens eine Beschleunigungssensor die Erdbeschleunigung (g) erfasst, woraufhin die Steuerelektronik im Sensorkalibrierungsmodus aus mindestens der erfassten Richtung der Erdbeschleunigung (g) einen oder mehrere relative Positionierungsparameter berechnet und speichert, die mindestens eine Information über die relative Positionierung zwischen der Sensoranordnung und dem Fahrzeugchassis umfassen.

Eine Aufgabe der vorliegenden Erfindung ist es, ein Verfahren zum Kalibrieren einer luftgefederten Vorrichtung in einem kartesischen

Vorrichtungskoordinatensystem der eingangs beschriebenen Art bereit zu stellen, welches einfach, verlässlich und bzw. oder mit genauem Ergebnis umgesetzt werden kann. Zumindest soll eine Alternative zu bekannten derartigen Verfahren geschaffen werden.

Die Aufgabe wird erfindungsgemäß durch ein Verfahren mit den Merkmalen gemäß Patentanspruch 1, durch eine luftgefederte Vorrichtung mit den Merkmalen gemäß Patentanspruch 5, durch ein Computerprogramm mit den Merkmalen gemäß Patentanspruch 6 sowie durch ein computerlesbares Medium mit den Merkmalen gemäß Patentanspruch 7 gelöst. Vorteilhafte Weiterbildungen sind in den Unteransprüchen beschrieben.

Somit betrifft die vorliegende Erfindung ein Verfahren zum Kalibrieren einer luftgefederten Vorrichtung in einem kartesischen Vorrichtungskoordinatensystem, wobei die Vorrichtung ein in der vertikalen Richtung unteres Vorrichtungsteil und ein in der vertikalen Richtung oberes Vorrichtungsteil aufweist, wobei die Vorrichtung wenigstens eine erste Luftfeder und eine zweite Luftfeder aufweist, welche parallel zueinander luftfedernd zwischen dem unteren Vorrichtungsteil und dem oberen Vorrichtungsteil angeordnet sind, wobei wenigstens die erste Luftfeder eine erste Inertialsensoreinheit aufweist, welche mit dem oberen Teil der Vorrichtung mitbeweglich angeordnet ist, wobei die erste Inertialsensoreinheit ausgebildet ist, Beschleunigungen wenigstens in der Längsrichtung und in der Querrichtung ihres kartesischen Sensorkoordinatensystems zu erfassen, das Verfahren mit wenigstens den Schritten an der stillstehenden Vorrichtung:

- horizontales Ausrichten des oberen Teils der Vorrichtung gegenüber dem unteren Teil der Vorrichtung,
- Erfassen der Beschleunigungen in der Längsrichtung und in der Querrichtung des kartesischen Sensorkoordinatensystems der ersten Inertialsensoreinheit,
- Kippen der Vorrichtung um einen ersten Kippwinkel um eine erste Kippachse, welche in der Horizontalen des kartesischen Vorrichtungskoordinatensystems verläuft,
- Erfassen der Beschleunigungen in der Längsrichtung und in der Querrichtung des gekippten kartesischen Sensorkoordinatensystems der ersten Inertialsensoreinheit und
- Bestimmen eines ersten vertikalen Drehwinkels um die vertikale Achse des kartesischen Sensorkoordinatensystems des kartesischen Sensorkoordinatensystems der ersten Inertialsensoreinheit gegenüber

3

dem kartesischen Vorrichtungskoordinatensystem in Abhängigkeit der erfassten Beschleunigungen des ungekippten kartesischen Sensorkoordinatensystems der ersten Inertialsensoreinheit und der erfassten Beschleunigungen des gekippten kartesischen Sensorkoordinatensystems der ersten Inertialsensoreinheit.

Unter einer stillstehenden Vorrichtung ist eine Vorrichtung zu verstehen, welche sich nicht im normalen Betrieb befindet, sondern außerhalb des normalen Betriebs, d.h. außerhalb der bestimmungsgemäßen Verwendung, gemäß des erfindungsgemäßen Verfahrens kalibriert wird, um danach den normalen Betrieb durchzuführen. Im Rahmen des erfindungsgemäßen Verfahrens kann sich die Vorrichtung hierzu auch bewegen, um die entsprechenden Schritte des Kalibrierens durchzuführen.

Gemäß einem Aspekt der Erfindung umfasst das Bestimmen des ersten vertikalen Drehwinkels die Schritte:

- Bestimmen des Anteils der Erdbeschleunigung in der Längsrichtung des gekippten kartesischen Sensorkoordinatensystems der ersten Inertialsensoreinheit,
- Bestimmen des Anteils der Erdbeschleunigung in der Querrichtung des gekippten kartesischen Sensorkoordinatensystems der ersten Inertialsensoreinheit,
- Bestimmen eines resultierenden Vektors aus dem Anteil der Erdbeschleunigung in der Längsrichtung und aus dem Anteil der Erdbeschleunigung in der Querrichtung des gekippten kartesischen Sensorkoordinatensystems der ersten Inertialsensoreinheit und
- Bestimmen des ersten vertikalen Drehwinkels um die vertikale Achse des kartesischen Sensorkoordinatensystems gegenüber dem kartesischen Vorrichtungskoordinatensystem aus dem resultierenden Vektor.

Gemäß einem weiteren Aspekt der Erfindung umfasst das Bestimmen des ersten vertikalen Drehwinkels aus dem resultierenden Vektor die Schritte:

- Bestimmen eines ersten Hilfswinkels zwischen dem resultierenden Vektor und der Längsrichtung oder der Querrichtung des kartesischen Sensorkoordinatensystems der ersten Inertialsensoreinheit,
- Fallunterscheidung auf Basis der Beschleunigungen in der Längsrichtung und in der Querrichtung des gekippten kartesischen Sensorkoordinatensystems, und
- Bestimmen des ersten vertikalen Drehwinkels mittels der Arc-Sin-Funktion vom ersten Hilfswinkel sowie Addieren oder Subtrahieren eines ganzzahligen Vielfachen von 90° zum bzw. vom Arc-Sin-Teilergebnis in Abhängigkeit der Fallunterscheidung.

Gemäß einem weiteren Aspekt der Erfindung erfolgt ein Wiederholen der Schritte zum Bestimmen des ersten Wertes des ersten vertikalen Drehwinkels für einen zweiten Kippwinkel durch ein zweites Kippen um eine zweite Kippachse, welche in der Horizontalen sowie rechtwinkelig zur erste Kippachse verläuft, so dass analog ein zweiter Wert des ersten vertikalen Drehwinkels bestimmt wird, wobei der neue Wert des ersten vertikale Drehwinkels auf dem ersten Wert des ersten vertikalen Drehwinkels wie zuvor beschrieben und dem zweiten Wert des ersten vertikalen Drehwinkel beruht, vorzugsweise dessen Mittelwert ist.

Mit anderen Worten werden die zuvor beschriebenen Verfahrensschritte hinsichtlich einer zweiten Kippachse wiederholt und der neue bzw. der resultierende Wert des ersten vertikalen Drehwinkels, welcher das Ergebnis dieser Verfahrensschritte darstellt und im Weiteren verwendet wird, wird aus den beiden vorangehenden Messungen bzw. Verkippungen gewonnen, insbesondere als Mittelwert der beiden Werte. Hierdurch kann die Genauigkeit des resultierenden Wertes des ersten vertikalen Drehwinkels erhöht werden.

Erfindungsgemäß weist die zweite Luftfeder eine zweite Inertialsensoreinheit auf, welche mit dem oberen Teil der Vorrichtung mitbeweglich angeordnet ist, wobei die zweite Inertialsensoreinheit ausgebildet ist, Beschleunigungen wenigstens in der Längsrichtung und in der Querrichtung ihres kartesischen Sensorkoordinatensystems zu erfassen, wobei ein Wiederholen der Schritte zum Bestimmen des ersten vertikalen Drehwinkels für den zweiten Inertialsensoreinheit erfolgt.

Die vorliegende Erfindung betrifft auch eine luftgefederte Vorrichtung mit einem in der vertikalen Richtung unteren Vorrichtungsteil, mit einem in der vertikalen Richtung oberen Vorrichtungsteil, mit wenigstens einer ersten Luftfeder und mit wenigstens einer zweiten Luftfeder, wobei die erste Luftfeder und die zweite Luftfeder parallel zueinander luftfedernd zwischen dem unteren Vorrichtungsteil und dem oberen Vorrichtungsteil angeordnet sind, wobei wenigstens die erste Luftfeder eine erste Inertialsensoreinheit aufweist, welche mit dem oberen Teil der Vorrichtung mitbeweglich angeordnet ist, wobei die erste Inertialsensoreinheit ausgebildet ist, Beschleunigungen wenigstens in der Längsrichtung und in der Querrichtung ihres kartesischen Sensorkoordinatensystems zu erfassen, und mit einer Steuerungseinheit, welche ausgebildet ist, ein Verfahren wie zuvor beschrieben auszuführen.

Die vorliegende Erfindung betrifft auch ein Computerprogramm, umfassend Befehle, welche bewirken, dass die luftgefederte Vorrichtung wie zuvor beschrieben ein Verfahren wie zuvor beschrieben ausführt. Hierdurch kann ein entsprechendes Computerprogramm zur Verfügung gestellt werden, um ein derartiges Verfahren auf einer derartigen luftgefederten Vorrichtung umzusetzen. Das Computerprogramm kann dabei auf einer Steuerungseinheit der luftgefederten Vorrichtung aber auch extern zur luftgefederten Vorrichtung mit entsprechenden Zugriff auf dessen erforderlichen Elemente ausgeführt werden. Insbesondere kann das Computerprogramm auf einem mobilen Endgerät wie beispielsweise einem Smartphone, einem Tablet oder dergleichen ausgeführt werden.

Die vorliegende Erfindung betrifft auch ein computerlesbares Medium, auf welchem das Computerprogramm wie zuvor beschrieben gespeichert ist.

Mit anderen Worten besteht die Aufgabe der vorliegenden Erfindung darin, ein Verfahren bereit zu stellen, welches eine zuverlässige präzise Verwendung von 3-Achs-Inertial-Messwerten aus beliebig angeordneten Luftfeder-Sensoreinheiten ermöglicht, indem es einen festen Bezug zwischen Sensor-Koordinatenachsen (Realsystem) und Maschinen-Koordinatenachsen (Bezugssystem) herstellt. Auf diese Weise soll es dem Betreiber von Luftfedern ermöglicht werden, individuelle Anwendungen mit Inertial-Messwerten zu schaffen, direkt in Kombination mit dem Betrieb der Luftfedern.

Die Erfindung bezieht sich auf die schwingungsisolierte Lagerung von Maschinen und Anlagen mittels Luftfedern. Die Luftfedern werden mit Inertialsensoren und vorzugsweise ferner mit Höhensensoren kombiniert. Die Sensorsignale werden in einer Steuereinheit erfasst und verarbeitet.

Die vorgeschlagene Lösung sieht vor, die mittels Druckluft veränderliche Höhe von Luftfedern in Kombination mit dem Signal der Erdbeschleunigung - als bekannte lotrechte Referenz - zu verwenden, um Kalibrier-Referenzfaktoren zu ermitteln. Dies soll wenigstens für eine Luftfeder-Sensoreinheit, vorzugsweise für mehrere Luftfeder-Sensoreinheiten und besonders vorzugsweise für alle Luftfeder-Sensoreinheiten der entsprechenden Vorrichtung erfolgen.

In der präferierten Ausführungsform ist das Verfahren in Form einer Steuerungssoftware programmiert und durchläuft die einzelnen Schritte automatisch.

Die Erfindung macht sich die Eigenschaft zu Nutze, dass die Erdbeschleunigung bei einem beliebig im Raum befindlichen und ruhenden 3-Achs-Inertialsensor anteilige Werte in jeder der drei Achsen liefert. Lediglich im Sonderfall, dass eine der Achsen exakt lotrecht angeordnet ist, ist das Signal der übrigen beiden Achsen Null. Dies sei gedanklich die Ausgangssituation.

Wird nun erfindungsgemäß der wenigstens eine 3-Achs-Inertialsensor um eine horizontale Achse gekippt, so dass die ursprünglich lotrechte Achse geneigt ist, wird mindestens eine der übrigen beiden Achsen anteilig ebenfalls ein Beschleunigungssignal liefern. Dies ist der vektorielle Anteil aus der lotrecht wirkenden Erdbeschleunigung. Bei einer definierten horizontalen Kippung $\alpha$ kann aus den jeweiligen vektoriellen Anteilen der beiden Achsen deren Orientierung in Bezug zur "Kipp"-Achse errechnet werden. Vorzugsweise ist diese definierte "Kipp"-Achse parallel zu einer der Koordinatenachsen des Bezugssystems. Orientierung bedeutet in diesem Fall, der Drehwinkel $\delta$ um die Z'-Achse, um die Achsen X' und Y' parallel zu den Achsen X und Y anzuordnen. Der Drehwinkel $\delta$ kann Werte im Bereich 0° bis < 360° annehmen.

Bei der schwingungsisolierten (und damit im Raum frei beweglichen) Aufstellung von Maschinen und Anlagen kann es die oben beschriebene definierte horizontale (Kipp-)Achse jedoch nicht als reales Teil geben. Des Weiteren sind die Luftfedern in der Regel nicht symmetrisch zum Schwerpunkt der Maschine oder Anlage angeordnet. Daher kann das Kippen durch eine individuell geregelte Ansteuerung der einzelnen Luftfedern erfolgen. Als Regelparameter können die Höhensignale verwendet werden, um daraus eine gezielte Kippung um die definierte Achse zu kontrollieren. Drei Höhenmesswerte und deren Position in der Maschine, beschrieben in Koordinaten des Bezugssystems, können verwendet werden, um die Kippung zu definieren.

Zur Berechnung von Winkeln aus vektoriellen Anteilen kann die trigonometrische Umkehrfunktion arctan verwendet werden. Diese errechnet jedoch nur Ergebnisse im Intervall 0° bis < 180° und ist gar für 90° nicht definiert (wenn die Ankathete Null ist). Somit ist die Umkehrfunktion arctan nicht geeignet, mathematisch Drehwinkel $\delta$ im Intervall 0° bis < 360° zu bestimmen.

Das erfindungsgemäße Verfahren sieht daher vor, aus den rechtwinklig zueinanderstehenden vektoriellen Anteilen Xg' und Yg' zunächst die Resultierende R' zu bestimmen. Diese Resultierende R' ist die Hypotenuse in einem rechtwinkligen Dreieck, dessen eingeschlossener Winkel $\beta$ an der Ankathete zur Bestimmung des gesuchten Drehwinkels $\delta$ benötigt wird. Mit der Umkehrfunktion arc sin kann im Intervall 90° bis -90° stetig ein Ergebnis errechnet werden. In Kombination mit einer Fallunterscheidung, welche die Vorzeichen der vektoriellen Anteile Xg' und Yg' in Bezug zur Richtung der Kippung im Bezugssystem berücksichtigt, wird aus dem Winkel $\beta$ plus oder minus einem ganzzahligen Vielfachen von 90° der Drehwinkel $\delta$ errechnet. Diese Berechnungsprozedur kann für jeden Sensor durchgeführt werden.

Grundsätzlich ist die Drehung um eine Achse ausreichend, um die Umrechnungsfaktoren zu bestimmen. Die technisch bedingte Auflösung der Sensormessung kann ggf. eine hinreichend genaue Messung von kleinen vektoriellen Anteilen beeinträchtigen, so dass bei Berechnungsschritten, bei denen die Gegenkathete des arc sin sehr klein ist, Ungenauigkeiten auftreten können.

Gemäß des erfindungsgemäßen Verfahren kann daher mit einem zweiten Zyklus eine Kippung orthogonal zur ersten Kippung durchgeführt und eine erneute Berechnung der Drehwinkel $\delta$ durchgeführt werden. Bei diesem zweiten Zyklus wird an Stelle des ursprünglichen kleinen vektoriellen Anteils nun der sehr große andere vektorielle Anteil als Gegenkathete bei der Berechnung des arc sin herangezogen.

Der kleinste erforderliche Kippwinkel $\alpha$ ergibt sich aus der gewünschten Genauigkeit im Bezug zur Auflösung A des Inertialsensors. Die Ansprechschwelle $\alpha 0$

errechnet sich aus dem Verhältnis der Auflösung des Inertialsensors im Verhältnis zur Erdbeschleunigung, multipliziert mit √2:

$$α0 = \arctan (A/g*\sqrt{2})$$

Zu beachten ist hierbei, dass die Kippung des Vektors der Erdbeschleunigung g um den Winkel α in der X'- Y'- Ebene einen Anteil R' erzeugt: R' = g * tan(α). Dieser Anteil R' wird im Sensor mit Vektorkomponenten Xg' und Yg' gemessen. Aus den Winkelbeziehungen im rechtwinkligen Dreieck und unter Berücksichtigung des oben beschriebenen Verfahrens mit zwei Zyklen ist mindestens eine der Vektorkomponenten größer/gleich R'/√2.

In einer abschließenden Berechnung können die Ergebnisse der beiden Zyklen für den Drehwinkel δ hinsichtlich ihrer Genauigkeit bewertet und gefiltert oder gemittelt werden. Abschließend können die individuellen Umrechnungsoperanden der jeweiligen Sensoren erstellt werden.

Ein Ausführungsbeispiel und weitere Vorteile der Erfindung werden nachstehend im Zusammenhang mit den folgenden Figuren erläutert. Darin zeigt:

Fig. 1      eine perspektivische schematische Darstellung einer Inertialsensoreinheit mit dessen kartesischen Sensorkoordinatensystem X', Y', Z';

Fig. 2      die Darstellung der Fig. 1 von oben mit zusätzlichem kartesischen Vorrichtungskoordinatensystem X, Y, Z;

Fig. 3      einen schematischen Längsschnitt durch eine Luftfeder;

Fig. 4      ein Verbund mehrerer Luftfedern;

Fig. 5      eine luftgefederte Vorrichtung in horizontaler Ausrichtung;

Fig. 6      die luftgefederte Vorrichtung der Fig. 5 um eine erste horizontale Kippachse geneigt; und

Fig. 7      eine Draufsicht auf das kartesische Sensorkoordinatensystem X', Y', Z' und das kartesische Vorrichtungskoordinatensystem X, Y, Z einer Inertialsensoreinheit im gekippten Zustand der Fig. 6.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

Diese kartesischen Raumrichtungen X, Y, Z werden einer luftgefederten Vorrichtung 3, welche eine luftgefederte Maschine 3 oder eine luftgefederte Anlage 3 sein kann, zugeordnet und daher als Vorrichtungskoordinatensystem X, Y, Z, als Maschinenkoordinatensystem X, Y, Z oder als Anlagenkoordinatensystem X, Y, Z bezeichnet. Das Vorrichtungskoordinatensystem X, Y, Z kann auch als Bezugskoordinatensystem X, Y, Z bezeichnet werden.

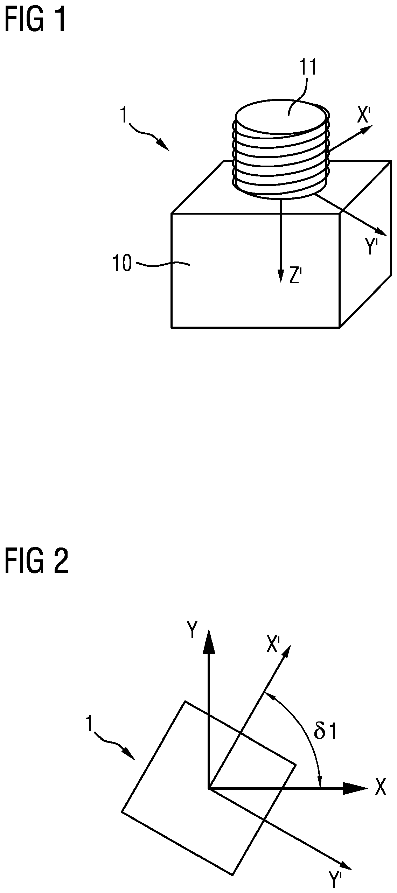

Erfindungsgemäß werden mehrere Inertialsensoreinheiten 1 verwendet, welche auch als inertiale Messeinheit 1 bezeichnet werden können und jeweils ausgebildet sind, Beschleunigungen in einer Längsrichtung X', in einer Querrichtung Y' und in einer vertikalen Richtung Z' des jeweiligen Sensorkoordinatensystems X', Y', Z' zu erfassen. Das Sensorkoordinatensystems X', Y', Z' kann auch als Realkoordinatensystem X', Y', Z' bezeichnet werden. Jede Inertialsensoreinheit 1 weist eine Sensoreinheit 10 auf, welche die entsprechenden Beschleunigungssensoren aufweist und welche mit einem Verbindungselement 11 in Form eines Gewindestutzens 11 versehen ist, welcher in der vertikalen Richtung Z' des Sensorkoordinatensystems X', Y', Z' nach oben zeigt, siehe Figur 1.

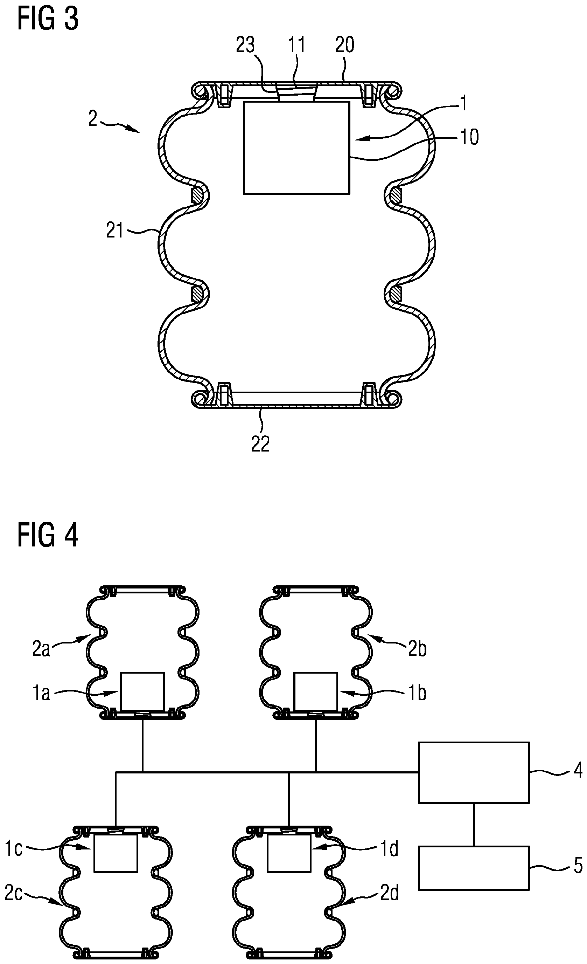

Die vier Inertialsensoreinheiten 1 sind jeweils innerhalb einer Luftfeder 2 angeordnet, indem die Inertialsensoreinheiten 1 jeweils mit ihrem Gewindestutzen 11 in einem Luftanschlussgewinde 23 eines oberen Anschlusselements 20 der Luftfeder 2 eingeschraubt sind. Das obere Anschlusselement 20 kann auch als Deckel 20 bezeichnet werden. Das obere Anschlusselement 20 ist über einen im Wesentlichen zylindrisch ausgebildeten Balg 21 mit einem unteren Anschlusselement 22 verbunden, welche zwischen sich den Innenraum (nicht bezeichnet) mit der jeweiligen Inertialsensoreinheit 1 der Luftfeder 2 einschließen, siehe Figur 3.

Die vier Luftfedern 2 werden bei der eingangs erwähnten Vorrichtung 3 gemeinsam verwendet, sodass die vier Inertialsensoreinheiten 1 signalübertragend mit einer gemeinsamen Steuerungseinheit 4 verbunden sind und von der Steuerungseinheit 4 betrieben sowie ausgewertet werden können. Die Steuerungseinheit 4 ist mit einer Bedieneinheit 5 verbunden, welche auch als Ein-/Ausgabeeinheit 5 umgesetzt sein kann, siehe Figur 4.

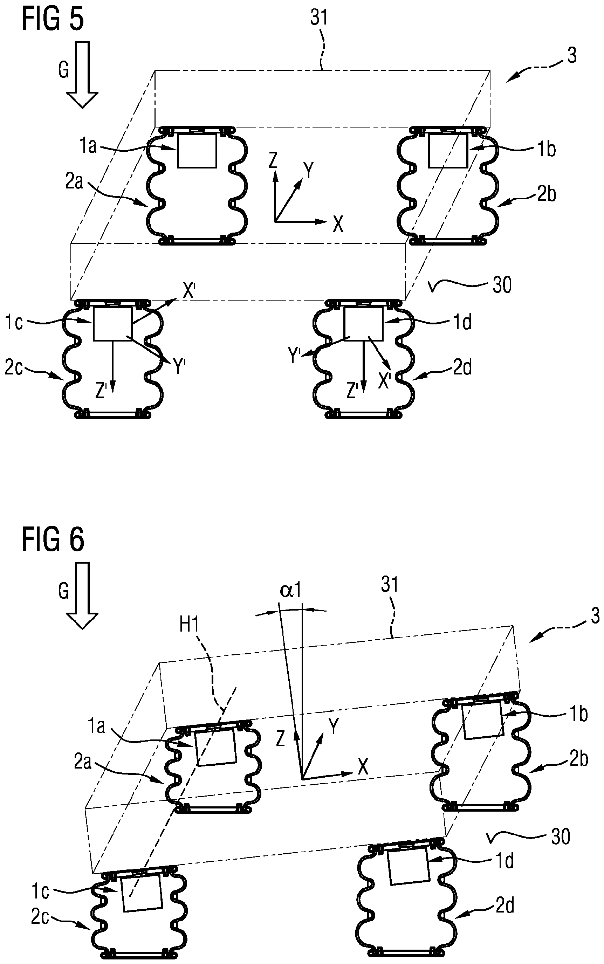

Die Veräußerung 3 weist ein unteres Vorrichtungsteil 30 auf, welches von der Vorrichtung 3 selbst bzw. von einem Untergrund 30 der Vorrichtung 3 gebildet werden kann. In der vertikalen Richtung Z im Vorrichtungskoordinatensystem X, Y, Z ist oberhalb des unteren Vorrichtungsteils 30 ein oberes Vorrichtungsteil 31 angeordnet. Das obere Vorrichtungsteil 31 ist über die vier Luftfedern 2 Luft gefedert mit dem unteren Vorrichtungsteil 30 verbunden. Die vertikale Richtung Z im Vorrichtungskoordinatensystem X, Y, Z entspricht dabei der Richtung der Erdanziehungskraft G. Gemäß der Darstellung der Figuren 5 und 6 sind links hinten eine erste Luftfeder 2a mit einer ersten Inertialsensoreinheit 1a, rechts hinten eine zweite Luftfeder 2b mit einer zweiten Inertialsensoreinheit 1b, links vorne eine dritte Luftfeder 2c mit einer dritten Inertialsensoreinheit 1c und rechts vorne eine vierte Luftfeder 2d mit einer vierten Inertialsensoreinheit 1d angeordnet.

Da die vier Inertialsensoreinheiten 1a-1d jeweils in das Luftanschlussgewinde 23 der jeweiligen der vier Luftfedern 2a-2d bis zum Anschlag eingeschraubt werden, sind die vier Sensorkoordinatensysteme X', Y', Z' der vier Inertialsensoreinheiten 1a-1d wenigstens hinsichtlich ihrer Längsachse X' und ihrer Querachse Y' sowohl unterschiedlich zueinander als auch abweichend zum Vorrichtungskoordinatensystem X, Y, Z ausgerichtet, siehe Figuren 5 und 6.

Daher kann seitens der Steuerungseinheit 4 die Vorrichtung 3 nunmehr erfindungsgemäß wie folgt kalibriert werden:

Es erfolgt zunächst ein horizontales Ausrichten des oberen Teils 31 der Vorrichtung 3 gegenüber dem unteren Teil 30 der Vorrichtung 3 siehe Figur 5. Hierzu können entsprechende Höhensensoren (nicht dargestellt) sowie die Veränderlichkeit der Höhe der Luftfedern 2a-2d verwendet werden. Nun erfolgt ein Erfassen der Beschleunigungen in der Längsrichtung X' und in der Querrichtung Y' des Sensorkoordinatensystems X', Y', Z' für jede der vier Inertialsensoreinheiten 1a-1d. Dieser Messwerte werden von der Steuerungseinheit 4 zunächst gespeichert.

Nun folgt ein Kippen der Vorrichtung 3 um einen ersten Kippwinkel $\alpha 1$ um eine erste Kippachse H1, welche in der Horizontalen X, Y des Vorrichtungskoordinatensystems X, Y, Z verläuft, siehe Figur 6. In diesem gekippten Zustand erfolgt ein Erfassen der Beschleunigungen in der Längsrichtung X' und in der Querrichtung Y' des gekippten Sensorkoordinatensystems X', Y', Z für jede der vier Inertialsensoreinheiten 1a-1d. Auch diese Messwerte werden von der Steuerungseinheit 4 aufgenommen.

Seitens der Steuerungseinheit 4 erfolgt nun ein Bestimmen eines ersten vertikalen Drehwinkels $\delta 1$ um die vertikale Achse Z' des Sensorkoordinatensystems X', Y', Z' für jede der vier Inertialsensoreinheiten 1a-1d gegenüber dem Vorrichtungskoordinatensystem X, Y, Z in Abhängigkeit der erfassten Beschleunigungen des ungekippten Sensorkoordinatensystems X', Y', Z' der jeweiligen der vier Inertialsensoreinheiten 1a-1d und der erfassten Beschleunigungen des gekippten Sensorkoordinatensystems X', Y', Z' der jeweiligen der vier Inertialsensoreinheiten 1a-1d.

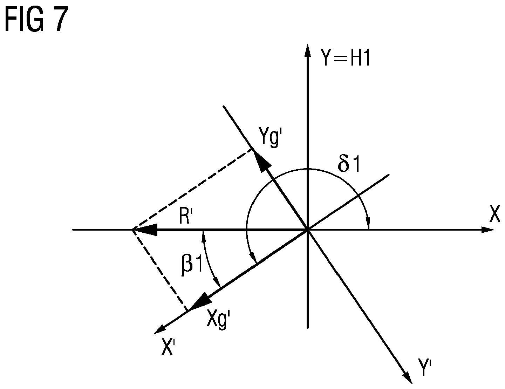

Genauer gesagt erfolgt das Bestimmen des ersten vertikalen Drehwinkels $\delta 1$ durch ein Bestimmen des Anteils Xg' der Erdbeschleunigung G in der Längsrichtung X' des gekippten Sensorkoordinatensystems X', Y', Z' der jeweiligen der vier Inertialsensoreinheiten 1a-1d, ein Bestimmen des Anteils Yg' der Erdbeschleunigung G in der Querrichtung Y' des gekippten Sensorkoordinatensystems X', Y', Z' der jeweiligen der vier Inertialsensoreinheiten 1a-1d, ein Bestimmen eines resultierenden Vektors R' aus dem Anteil Xg' der Erdbeschleunigung G in der Längsrichtung X' und aus dem Anteil Yg' der Erdbeschleunigung G in der Querrichtung Y' des gekippten Sensorkoordinatensystems X', Y', Z' der jeweiligen der vier Inertialsensoreinheiten 1a-1d und ein Bestimmen des ersten vertikalen Drehwinkels $\delta 1$ um die vertikale Achse Z' des Sensorkoordinatensystems X', Y', Z' gegenüber dem Vorrichtungskoordinatensystem X, Y, Z aus dem resultierenden Vektor R' für jede der vier Inertialsensoreinheiten 1a-1d, siehe Figur 7.

Genauer gesagt erfolgt das Bestimmen des ersten vertikalen Drehwinkels $\delta 1$ aus dem resultierenden Vektor R' durch ein Bestimmen eines ersten Hilfswinkels $\beta 1$ zwischen dem resultierenden Vektor R' und der Längsrichtung X' oder der Querrichtung Y' des kartesischen Sensorkoordinatensystems X', Y', Z') der jeweiligen der vier Inertialsensoreinheiten 1a-1d. Anschließend erfolgt mittels einer Fallunterscheidung bzw. in Abhängigkeit des Ergebnisses der Fallunterscheidung ein Addieren oder ein Subtrahieren eines ganzzahligen Vielfachen von 90° zum bzw. vom ersten Hilfswinkel $\beta 1$, so dass der korrigierte Hilfswinkel $\beta 1$ zwischen - 90° und +90° liegt, wodurch ein Bestimmen des ersten vertikalen Drehwinkels $\delta 1$ mittels der Arc-Tan-Funktion für jede der vier Inertialsensoreinheiten 1a-1d ermöglicht wird.

## Bezugszeichenliste (Teil der Beschreibung)

$\alpha 1$    erster horizontaler Kippwinkel um erste horizontale Kippachse H1

$\beta 1$    erster Hilfswinkel

$\delta 1$    erster vertikaler Drehwinkel um vertikale Richtung Z des Vorrichtungskoordinatensystems und um vertikale Richtung Z' des Sensor-Koordinatensystems

G    Richtung der Erdanziehungskraft

H1    erste horizontale Kippachse

R'    resultierender Vektor

Xg'    Anteil der Erdbeschleunigung G in Längsrichtung X' des gekippten kartesischen Sensorkoordinatensystems X', Y', Z'

Yg'    Anteil der Erdbeschleunigung G in Querrichtung Y' des gekippten kartesischen Sensorkoordinatensystems X', Y', Z'

X    Längsrichtung des Vorrichtungs-, Maschinen- bzw. Anlagenkoordinatensystems bzw. des Bezugskoordinatensystems

Y    Querrichtung des Vorrichtungs-, Maschinen- bzw. Anlagenkoordinatensystems bzw. des Bezugskoordinatensystems

Z    vertikale Richtung des Vorrichtungs-, Maschinen- bzw. Anlagenkoordinatensystems bzw. des Bezugskoordinatensystems
X, Y    Horizontale; horizontale Ebene

X'    Längsrichtung des Sensor-Koordinatensystems bzw. des Realkoordinatensystems
Y'    Querrichtung des Sensor-Koordinatensystems bzw. des Realkoordinatensystems
Z'    vertikale Richtung des Sensor-Koordinatensystems bzw. des Realkoordinatensystems
1    Inertialsensoreinheiten; inertiale Messeinheiten
1a-1d    erste bis vierte Inertialsensoreinheit 1
10    Sensoreinheit
11    Verbindungselement; Gewindestutzen

2    Luftfedern
2a-2d    erste bis vierte Luftfeder 2
20    oberes Anschlusselement; Deckel
21    Balg
22    unteres Anschlusselement
23    Luftanschlussgewinde

3    luftgefederte Vorrichtung; luftgefederte Maschine; luftgefederte Anlage
30    unteres Vorrichtungs-, Maschinen- bzw. Anlagenteil bzw. Untergrund
31    oberes Vorrichtungs-, Maschinen- bzw. Anlagenteil

4    Steuerungseinheit

5    Bedien- bzw. Ein-/Ausgabeeinheit


**Patentansprüche**

1.  Verfahren zum Kalibrieren einer luftgefederten Vorrichtung (3) in einem kartesischen Vorrichtungskoordinatensystem (X, Y, Z),

    wobei die Vorrichtung (3) ein in der vertikalen Richtung (Z) unteres Vorrichtungsteil (30) und ein in der vertikalen Richtung (Z) oberes Vorrichtungsteil (31) aufweist,
    wobei die Vorrichtung (3) wenigstens eine erste Luftfeder (2a) und eine zweite Luftfeder (2b) aufweist, welche parallel zueinander luftfedernd zwischen dem unteren Vorrichtungsteil (30) und dem oberen Vorrichtungsteil (31) angeordnet sind,
    wobei wenigstens die erste Luftfeder (2a) eine erste Inertialsensoreinheit (1a) aufweist, welche mit dem oberen Teil (31) der Vorrichtung (3) mitbeweglich angeordnet ist,
    wobei die erste Inertialsensoreinheit (1a) ausgebildet ist, Beschleunigungen wenigstens in der Längsrichtung (X') und in der Querrichtung (Y') ihres kartesischen Sensorkoordinatensystems (X', Y', Z') zu erfassen,
das Verfahren mit wenigstens den Schritten an der stillstehenden Vorrichtung (3),

    • horizontales Ausrichten des oberen Teils (31) der Vorrichtung (3) gegenüber dem unteren Teil (30) der Vorrichtung (3),
    • Erfassen der Beschleunigungen in der Längsrichtung (X') und in der Querrichtung (Y') des kartesischen Sensorkoordinatensystems (X', Y', Z') der ersten Inertialsensoreinheit (1a),
    • Kippen der Vorrichtung (3) um einen ersten Kippwinkel ($\alpha1$) um eine erste Kippachse (H1), welche in der Horizontalen (X, Y) des kartesischen Vorrichtungskoordinatensystems (X, Y, Z) verläuft,
    • Erfassen der Beschleunigungen in der Längsrichtung (X') und in der Querrichtung (Y') des gekippten kartesischen Sensorkoordinatensystems (X', Y', Z') der ersten Inertialsensoreinheit (1a) und
    • Bestimmen eines ersten vertikalen Drehwinkels ($\delta1$) um die vertikale Achse (Z') des kartesischen Sensorkoordinatensystems (X', Y', Z') der ersten Inertialsensoreinheit (1a) gegenüber dem kartesischen Vorrichtungskoordinatensystem (X, Y, Z) in Abhängigkeit der erfassten Beschleunigungen des ungekippten kartesischen Sensorkoordinatensystems (X', Y', Z') der ersten Inertialsensoreinheit (1a) und der erfassten Beschleunigungen des gekippten kartesischen Sensorkoordinatensystems (X', Y', Z') der ersten Inertialsensoreinheit (1a),

    wobei die zweite Luftfeder (2b) eine zweite Inertialsensoreinheit (1b) aufweist, welche mit dem oberen Teil (31) der Vorrichtung (3) mitbeweglich angeordnet ist,
    wobei die zweite Inertialsensoreinheit (1b) ausgebildet ist, Beschleunigungen wenigstens in der Längsrichtung (X') und in der Querrichtung (Y') ihres kartesischen Sensorkoordinatensystems (X', Y', Z') zu erfassen,
    wobei ein Wiederholen der Schritte zum Bestimmen des ersten vertikalen Drehwinkels ($\delta1$) für den zweiten Inertialsensoreinheit (1b) erfolgt.

2.  Verfahren nach Anspruch 1, **dadurch gekennzeichnet, dass** das Bestimmen des ersten vertikalen Drehwinkels ($\delta1$) die Schritte umfasst:

    • Bestimmen des Anteils (Xg') der Erdbeschleunigung (G) in der Längsrichtung (X') des gekippten kartesischen Sensorkoordinatensystems (X', Y', Z') der ersten Inertialsensoreinheit (1a),
    • Bestimmen des Anteils (Yg') der Erdbeschleunigung (G) in der Querrichtung (Y') des gekippten kartesischen Sensorkoordinatensystems (X', Y', Z') der ersten Inertialsensoreinheit (1a),

• Bestimmen eines resultierenden Vektors (R') aus dem Anteil (Xg') der Erdbeschleunigung (G) in der Längsrichtung (X') und aus dem Anteil (Yg') der Erdbeschleunigung (G) in der Querrichtung (Y') des gekippten kartesischen Sensorkoordinatensystems (X', Y', Z') der ersten Inertialsensoreinheit (1a) und

• Bestimmen des ersten vertikalen Drehwinkels (δ1) um die vertikale Achse (Z') des kartesischen Sensorkoordinatensystems (X', Y', Z') gegenüber dem kartesischen Vorrichtungskoordinatensystem (X, Y, Z) aus dem resultierenden Vektor (R').

3. Verfahren nach Anspruch 2, **dadurch gekennzeichnet, dass** das Bestimmen des ersten vertikalen Drehwinkels (δ1) aus dem resultierenden Vektor (R') die Schritte umfasst:

• Bestimmen eines ersten Hilfswinkels (β1) zwischen dem resultierenden Vektor (R') und der Längsrichtung (X') oder der Querrichtung (Y') des kartesischen Sensorkoordinatensystems (X', Y', Z') der ersten Inertialsensoreinheit (1a),

• Fallunterscheidung auf Basis der Beschleunigungen in der Längsrichtung (X') und in der Querrichtung (Y') des gekippten kartesischen Sensorkoordinatensystems (X', Y', Z'),

Bestimmen des ersten vertikalen Drehwinkels (δ1) mittels der Arc-Sin-Funktion vom ersten Hilfswinkel (β1) sowie Addieren oder Subtrahieren eines ganzzahligen Vielfachen von 90° zum bzw. vom Arc-Sin-Teilergebnis in Abhängigkeit der Fallunterscheidung.

4. Verfahren nach einem der vorangehenden Ansprüche, **gekennzeichnet durch**

ein Wiederholen der Schritte zum Bestimmen des ersten Wertes des ersten vertikalen Drehwinkels (δ1) für einen zweiten Kippwinkel durch ein zweites Kippen um eine zweite Kippachse, welche in der Horizontalen (X, Y) sowie rechtwinkelig zur erste Kippachse (H1) verläuft, so dass analog ein zweiter Wert des ersten vertikalen Drehwinkel (δ1) bestimmt wird, wobei der neue Wert des ersten vertikale Drehwinkels (δ1) auf dem ersten Wert des ersten vertikalen Drehwinkels (δ1) nach einem der vorangehenden Ansprüche und dem zweiten Wert des ersten vertikalen Drehwinkel beruht, vorzugsweise dessen Mittelwert ist.

5. Luftgefederte Vorrichtung (3)

mit einem in der vertikalen Richtung (Z) unteren Vorrichtungsteil (30),
mit einem in der vertikalen Richtung (Z) oberen Vorrichtungsteil (31),
mit wenigstens einer ersten Luftfeder (2a) und mit wenigstens einer zweiten Luftfeder (2b), wobei die erste Luftfeder (2a) und die zweite Luftfeder (2b) parallel zueinander luftfedernd zwischen dem unteren Vorrichtungsteil (30) und dem oberen Vorrichtungsteil (31) angeordnet sind,
wobei wenigstens die erste Luftfeder (2a) eine erste Inertialsensoreinheit (1a) aufweist, welche mit dem oberen Teil (31) der Vorrichtung (3) mitbeweglich angeordnet ist,
wobei die erste Inertialsensoreinheit (1a) ausgebildet ist, Beschleunigungen wenigstens in der Längsrichtung (X') und in der Querrichtung (Y') ihres kartesischen Sensorkoordinatensystems (X', Y', Z') zu erfassen, und mit einer Steuerungseinheit (15), welche ausgebildet ist, ein Verfahren nach einem der vorangehenden Ansprüche auszuführen.

6. Computerprogramm, umfassend Befehle, welche bewirken, dass die luftgefederte Vorrichtung (1) nach Anspruch 5 ein Verfahren nach einem der Ansprüche 1 bis 4 ausführt.

7. Computerlesbares Medium, auf welchem das Computerprogramm nach Anspruch 6 gespeichert ist.

**Claims**

1. Method for calibrating an air-sprung device (3) in a Cartesian device coordinate system (X, Y, Z),

wherein the device (3) has a device part (30) that is a lower device part in the vertical direction (Z) and a device part (31) that is an upper device part in the vertical direction (Z),
wherein the device (3) has at least a first air spring (2a) and a second air spring (2b), which are arranged parallel to one another between the lower device part (30) and the upper device part (31) so as to provide air cushioning,
wherein at least the first air spring (2a) has a first inertial sensor unit (1a), which is arranged so as to move concomitantly with the upper part (31) of the device (3), wherein the first inertial sensor unit (1a) is designed to detect accelerations at least in the longitudinal direction (X') and in the transverse direction (Y') of its Cartesian sensor coordinate system (X', Y', Z'),
the method having at least the steps, on the stationary device (3), of:

• horizontally aligning the upper part (31) of the device (3) with respect to the lower part (30) of the device (3),
• detecting the accelerations in the longitudinal direction (X') and in the transverse direction (Y') of the Cartesian sensor coordinate system (X', Y', Z') of the first inertial sensor unit (1a),
• tilting the device (3) through a first tilt angle (a1) about a first tilt axis (H1), which runs in the horizontal (X, Y) of the Cartesian device coordinate system (X, Y, Z),
• detecting the accelerations in the longitudinal direction (X') and in the transverse direction (Y') of the tilted Cartesian sensor coordinate system (X', Y', Z') of the first inertial sensor unit (1a), and
• determining a first vertical rotation angle (δ1) about the vertical axis (Z') of the Cartesian sensor coordinate system (X', Y', Z') of the first inertial sensor unit (1a) with respect to the Cartesian device coordinate system (X, Y, Z) according to the detected accelerations of the untilted Cartesian sensor coordinate system (X', Y', Z') of the first inertial sensor unit (1a) and the detected accelerations of the tilted Cartesian sensor coordinate system (X', Y', Z') of the first inertial sensor unit (1a),

wherein the second air spring (2b) has a second inertial sensor unit (1b), which is arranged so as to move concomitantly with the upper part (31) of the device (3),
wherein the second inertial sensor unit (1b) is designed to detect accelerations at least in the longitudinal direction (X') and in the transverse direction (Y') of its Cartesian sensor coordinate system (X', Y', Z'),
wherein the steps to determine the first vertical rotation angle (δ1) are repeated for the second inertial sensor unit (1b).

2. Method according to Claim 1, **characterized in that** determining the first vertical rotation angle (δ1) comprises the steps of:

    • determining the component (Xg') of the gravitational acceleration (G) in the longitudinal direction (X') of the tilted Cartesian sensor coordinate system (X', Y', Z') of the first inertial sensor unit (1a),
    • determining the component (Yg') of the gravitational acceleration (G) in the transverse direction (Y') of the tilted Cartesian sensor coordinate system (X', Y', Z') of the first inertial sensor unit (1a),
    • determining a resultant vector (R') from the component (Xg') of the gravitational acceleration (G) in the longitudinal direction (X') and from the component (Yg') of the gravitational acceleration (G) in the transverse direction (Y') of the tilted Cartesian sense accordance system (X', Y', Z') of the first inertial sensor unit (1a), and
    • determining the first vertical rotation angle (δ1) about the vertical axis (Z') of the Cartesian sensor coordinate system (X', Y', Z') with respect to the Cartesian device coordinate system (X, Y, Z) from the resultant vector (R').

3. Method according to Claim 2, **characterized in that** determining the first vertical rotation angle (δ1) from the resultant vector (R') comprises the steps of:

    • determining a first auxiliary angle (β1) between the resultant vector (R') and the longitudinal direction (X') or the transverse direction (Y') of the Cartesian sensor coordinate system (X', Y', Z') of the first inertial sensor unit (1a),
    • distinguishing between cases on the basis of the accelerations in the longitudinal direction (X') and in the transverse direction (Y') of the tilted Cartesian sensor coordinate system (X', Y', Z'),

    determining the first vertical rotation angle (δ1) by means of the arcsin function of the first auxiliary angle (β1) and adding or subtracting an integer multiple of 90° to or from the arcsin partial result according to the distinction between cases.

4. Method according to one of the preceding claims, **characterized by** repeating the steps to determine the first value of the first vertical rotation angle (δ1) for a second tilt angle by way of a second tilting about a second tilt axis, which runs in the horizontal (X, Y) and at right angles to the first tilt axis (H1), so that a second value of the first vertical rotation angle (δ1) is determined analogously, wherein the new value of the first vertical rotation angle (δ1) is based on the first value of the first vertical rotation angle (δ1) according to one of the preceding claims and on the second value of the first vertical rotation angle, preferably is the mean value thereof.

5. Air-sprung device (3)

    having a device part (30) that is a lower device part in the vertical direction (Z),
    having a device part (31) that is an upper device part in the vertical direction (Z),
    having at least a first air spring (2a) and having at least a second air spring (2b),
    wherein the first air spring (2a) and the second air spring (2b) are arranged parallel to one another between the lower device part (30) and the upper device part (31) so as to provide air cushioning,

wherein at least the first air spring (2a) has a first inertial sensor unit (1a), which is arranged so as to move concomitantly with the upper part (31) of the device (3),

wherein the first inertial sensor unit (1a) is designed to detect accelerations at least in the longitudinal direction (X') and in the transverse direction (Y') of its Cartesian sensor coordinate system (X', Y', Z'), and

having a control unit (15), which is designed to carry out a method according to one of the preceding claims.

6. Computer program comprising commands that cause the air-sprung device (1) according to Claim 5 to carry out a method according to one of Claims 1 to 4.

7. Computer-readable medium on which the computer program according to Claim 6 is stored.

## Revendications

1. Procédé permettant d'étalonner un dispositif de suspension pneumatique (3) dans un système de coordonnées cartésiennes de dispositif (X, Y, Z),

dans lequel le dispositif (3) présente une partie de dispositif inférieure (30) dans la direction verticale (Z) et une partie de dispositif supérieure (31) dans la direction verticale (Z),

dans lequel le dispositif (3) présente au moins un premier ressort pneumatique (2a) et un deuxième ressort pneumatique (2b) qui sont disposés en parallèle l'un à l'autre à suspension pneumatique entre la partie de dispositif inférieure (30) et la partie de dispositif supérieure (31),

dans lequel au moins le premier ressort pneumatique (2a) présente une première unité de capteur inertiel (1a) qui est disposée de manière mobile avec la partie supérieure (31) du dispositif (3),

dans lequel la première unité de capteur inertiel (1a) est réalisée pour détecter des accélérations au moins dans la direction longitudinale (X') et dans la direction transversale (Y') de son système de coordonnées cartésiennes de capteur (X', Y', Z'),

le procédé comprenant au moins les étapes sur le dispositif (3) immobile consistant à :

• aligner horizontalement la partie supérieure (31) du dispositif (3) par rapport à la partie inférieure (30) du dispositif (3),

• détecter les accélérations dans la direction longitudinale (X') et dans la direction transversale (Y') du système de coordonnées cartésiennes de capteur (X', Y', Z') de la première unité de capteur inertiel (1a),

• basculer le dispositif (3) d'un premier angle de basculement (a1) autour d'un premier axe de basculement (H1) qui s'étend dans l'horizontale (X, Y) du système de coordonnées cartésiennes de dispositif (X, Y, Z),

• détecter les accélérations dans la direction longitudinale (X') et dans la direction transversale (Y') du système de coordonnées cartésiennes de capteur (X', Y', Z') basculé de la première unité de capteur inertiel (1a), et

• déterminer un premier angle de rotation vertical ($\delta$1) autour de l'axe vertical (Z') du système de coordonnées cartésiennes de capteur (X', Y', Z') de la première unité de capteur inertiel (1a) par rapport au système de coordonnées cartésiennes de dispositif (X, Y, Z) en fonction des accélérations détectées du système de coordonnées cartésiennes de capteur (X', Y', Z') non basculé de la première unité de capteur inertiel (1a) et des accélérations détectées du système de coordonnées cartésiennes de système (X', Y', Z') basculé de la première unité de capteur inertiel (1a),

dans lequel le deuxième ressort pneumatique (2b) présente une deuxième unité de capteur inertiel (1b) qui est disposée de manière mobile avec la partie supérieure (31) du dispositif (3),

dans lequel la deuxième unité de capteur inertiel (1b) est réalisée pour détecter des accélérations au moins dans la direction longitudinale (X') et dans la direction transversale (Y') de son système de coordonnées cartésiennes de capteur (X', Y', Z'),

dans lequel les étapes de détermination du premier angle de rotation vertical ($\delta$1) pour la deuxième unité de capteur inertiel (1b) sont répétées.

2. Procédé selon la revendication 1, **caractérisé en ce que** la détermination du premier angle de rotation vertical ($\delta$1) comprend les étapes consistant à :

• déterminer la part (Xg') de l'accélération gravitationnelle (G) dans la direction longitudinale (X') du système de coordonnées cartésiennes de capteur (X', Y', Z') basculé de la première unité de capteur inertiel (1a),

• déterminer la part (Yg') de l'accélération gravitationnelle (G) dans la direction transversale (Y') du système de coordonnées cartésiennes de capteur (X', Y', Z') basculé de la première unité de capteur inertiel (1a),

• déterminer un vecteur résultant (R') à partir de la part (Xg') de l'accélération gravitationnelle (G) dans la direction longitudinale (X') et à partir de la part (Yg') de l'accélération gravitationnelle (G) dans la direction transversale (Y') du système de coordonnées cartésiennes de capteur (X', Y', Z') basculé de la première unité de capteur inertiel (1a), et

• déterminer le premier angle de rotation vertical (δ1) autour de l'axe vertical (Z') du système de coordonnées cartésiennes de capteur (X', Y', Z') par rapport au système de coordonnées cartésiennes de dispositif (X, Y, Z) à partir du vecteur résultant (R').

**3.** Procédé selon la revendication 2, **caractérisé en ce que** la détermination du premier angle de rotation vertical (δ1) à partir du vecteur résultant (R') comprend les étapes consistant à :

• déterminer un premier angle auxiliaire (β1) entre le vecteur résultant (R') et la direction longitudinale (X') ou la direction transversale (Y') du système de coordonnées cartésiennes de capteur (X', Y', Z') de la première unité de capteur inertiel (1a),

• différentiation de cas sur la base des accélérations dans la direction longitudinale (X') et dans la direction transversale (Y') du système de coordonnées cartésiennes de capteur (X', Y', Z') basculé,

déterminer le premier angle de rotation vertical (δ1) au moyen de la fonction arc sin à partir du premier angle auxiliaire (β1) et additionner ou soustraire un multiple entier de 90° au ou du résultat partiel arc sin en fonction de la différenciation de cas.

**4.** Procédé selon l'une quelconque des revendications précédentes,

**caractérisé par** une répétition des étapes consistant à déterminer la première valeur du premier angle de rotation vertical (δ1) pour un deuxième angle de basculement par un deuxième basculement autour d'un deuxième axe de basculement qui s'étend dans l'horizontale (X, Y) ainsi que perpendiculairement au premier axe de basculement (H1) de sorte que de manière analogue, une deuxième valeur du premier angle de rotation vertical (δ1) est déterminée,

dans lequel la nouvelle valeur du premier angle de rotation vertical (δ1) repose sur la première valeur du premier angle de rotation vertical (δ1) selon l'une quelconque des revendications précédentes et la deuxième valeur du premier angle de rotation vertical, en étant de préférence la moyenne de celle-ci.

**5.** Dispositif de suspension pneumatique (3)

comprenant une partie de dispositif inférieure (30) dans la direction verticale (Z),

comprenant une partie de dispositif supérieure (31) dans la direction verticale (Z),

comprenant au moins un premier ressort pneumatique (2a), et

comprenant au moins un deuxième ressort pneumatique (2b),

dans lequel le premier ressort pneumatique (2a) et le deuxième ressort pneumatique (2b) sont disposés en parallèle l'un à l'autre à suspension pneumatique entre la partie de dispositif inférieure (30) et la partie de dispositif supérieure (31),

dans lequel au moins le premier ressort pneumatique (2a) présente une première unité de capteur inertiel (1a) qui est disposée de manière mobile avec la partie supérieure (31) du dispositif (3),

dans lequel la première unité de capteur inertiel (1a) est réalisée pour détecter des accélérations au moins dans la direction longitudinale (X') et dans la direction transversale (Y') de son système de coordonnées cartésiennes de capteur (X', Y', Z'), et

comprenant une unité de commande (15) qui est réalisée pour exécuter un procédé selon l'une quelconque des revendications précédentes.

**6.** Programme informatique, comprenant des instructions qui font que le dispositif de suspension pneumatique (1) selon la revendication 5 exécute un procédé selon l'une quelconque des revendications 1 à 4.

**7.** Support lisible par ordinateur sur lequel est enregistré le programme informatique selon la revendication 6.

FIG 1

FIG 2

## FIG 3

## FIG 4

**FIG 5**

**FIG 6**

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015202624 A1
- DE 102015202622 A1
- US 10300602 B2
- DE 102015015094 A1
- DE 102016222082 A1
- WO 2017129199 A1
- US 2011197414 A1